# EUROPÄISCHE PATENTSCHRIFT

(11) **EP 1 520 745 B1**
(45) Veröffentlichungstag und Bekanntmachung des Hinweises auf die Patenterteilung: **04.03.2009**
(21) Anmeldenummer: 04022036.0
(22) Anmeldetag: 16.09.2004
(51) Int. Cl.: B60K 31/00, G01S 13/93

(54) **Verfahren und Vorrichtung zur Erkennung und Einstellung von Links- oder Rechtsverkehr**
Method and device for Recognising and adjusting left-hand or right hand driving
Procédé et dispositif de reconnaissance et régulation de conduite à gauche ou conduite à droite

(30) Priorität: 30.09.2003 DE 10345809
(43) Veröffentlichungstag der Anmeldung: 06.04.2005
(73) Patentinhaber: ROBERT BOSCH GMBH, 70442 Stuttgart (DE)
(72) Erfinder: Leineweber, Thilo, 70174 Stuttgart (DE); Urban, Werner, 71665 Vaihingen/Enz (DE); Henn, Ruediger-Walter, 70599 Stuttgart (DE)

(56) Entgegenhaltungen:
- DE-A1- 19 637 053
- DE-A1- 19 828 160

## Beschreibung

Die vorliegende Erfindung betrifft ein Vorrichtung und ein Verfahren zur automatischen Erkennung und Einstellung des Verkehrssinns in einer adaptiven Abstands- und Geschwindigkeitsregelung, insbesondere für ein Kraftfahrzeug. Hierzu wird dem adaptiven Abstands- und Geschwindigkeitsregler die Relativgeschwindigkeit detektierter Objekte, der seitliche Versatz der detektierten Objekte bezüglich der Fahrzeuglängsachse und die Geschwindigkeit des eigenen Fahrzeugs zugeführt. In Abhängigkeit der detektierten, entgegenkommenden, beweglichen Objekte, der detektierten, stehenden Objekte, der detektierten, beweglichen, schnelleren Objekte, der detektierten, beweglichen, langsameren Objekte oder einer Kombination hieraus wird entschieden, ob ein Linksverkehr oder ein Rechtsverkehr vorliegt.

### Stand der Technik

Aus der Veröffentlichung "Adaptive Cruise Control System - Aspects and Development Trends" von Winner, Witte, Uhler und Lichtenberg, veröffentlicht auf der SAE International Congress & Exposition, 26.-29. Februar 1996 ist ein Abstands- und Geschwindigkeitsregler bekannt, der Radarstrahlung aussendet und die an Objekten reflektierten Teilwellen empfängt. Mittels dem verwendeten FMCW-Modulationsverfahren ist es möglich, aus den empfangenen Radarteilwellen die Relativgeschwindigkeit und den Abstand der erkannten Objekte zu ermitteln und in deren Abhängigkeit die Geschwindigkeit des Fahrzeugs zu regeln. Dabei wird bei einem vorhandenen, vorherfahrenden Fahrzeug eine Geschwindigkeitsregelung im Sinne einer Abstandskonstantregelung durchgeführt und bei Nichtvorhandensein eines vorherfahrenden Fahrzeugs eine Geschwindigkeitsregelung im Sinne einer Konstantgeschwindigkeitsregelung durchgeführt.

Aus der DE 196 37 053 A1 ist ein Verfahren und eine Vorrichtung zur Erkennung von Rechts- oder Linksverkehr nach dem Oberbegriff des Verfahrensanspruchs 1 und des Vorrichtungsanspruchs 9 bekannt. Die vorherrschende Ausrichtung des Verkehrsflusses wird anhand von weiteren Fahrzeugen bestimmt, die dem genannten Fahrzeug entgegenkommen. Dazu wird eine Häufigkeitsverteilung in Abhängigkeit eines seitlichen, vorzugsweise richtungsbehafteten Abstandes Y gebildet, ein Schwerpunkt S dieser Häufigkeitsverteilung bestimmt und überprüft, auf welcher Seite des geregelten Fahrzeugs dieser Schwerpunkt S liegt.

Aus der DE 198 28160 A1 ist ein Verfahren zum automatischen Erkennen der Hauptrichtungsfahrbahn bei einer mehrspurigen Strecke mit den Schritten Erfassen der Geschwindigkeit eines ersten Fahrzeugs und Erfassen des Abstandes des ersten Fahrzeugs von einem Hindernis bekannt. Um die Hauptrichtungsfahrbahn zu erkennen, wird erfindungsgemäß zusätzlichen eine Ermittelung der Vektorkomponenten der Relativgeschwindigkeit des ersten Fahrzeugs gegenüber dem Hindernis in einem Bezugssystem durchgeführt und eine Ermittelung der Hauptrichtungsfahrbahn aus einer der erfassten Vektorkomponenten der Geschwindigkeit durchgeführt.

Aus der DE 196 37 053 A1 ist ein Verfahren sowie eine darauf beruhende Vorrichtung zur automatischen Erkennung, ob in einer Verkehrssituation oder in einem Verkehrsumfeld Rechts- oder Linksverkehr vorherrscht, bekannt. Das genannte Verfahren wird bei einem Fahrzeug im Rahmen einer adaptiven Geschwindigkeitsregelung eingesetzt. Die vorherrschende Ausrichtung des Verkehrsflusses wird anhand von weiteren Fahrzeugen bestimmt, die dem genannten Fahrzeug entgegenkommen. Dazu wird eine Häufigkeitsverteilung in Abhängigkeit eines seitlichen, vorzugsweise richtungsbehafteten Abstandes y gebildet, ein Schwerpunkt S dieser Häufigkeitsverteilung bestimmt und überprüft, auf welcher Seite des geregelten Fahrzeugs dieser Schwerpunkt S liegt.

### Kern und Vorteile der Erfindung

Aufgabe der vorliegenden Erfindung ist es, ein Verfahren und eine zugehörige Vorrichtung bereitzustellen, die es erlauben mit hoher Sicherheit den momentan vorherrschenden Verkehrssinn zu erkennen und den Abstands- und Geschwindigkeitsregler dementsprechend einzustellen. Die Kenntnis des Verkehrssinns ist für den Abstands- und Geschwindigkeitsregler von großer Bedeutung, da einzelne Reglerfunktionen die Kenntnis des Verkehrssinns benötigen. Beispielsweise dürfen langsamere Fahrzeuge als das geregelte Fahrzeug nur auf der Seite überholt werden, die für schnelleren Verkehr vorgegeben ist. Dies ist beispielsweise bei rechtssinnigem Verkehr, wie er in Mitteleuropa vorliegt, nur auf der linken Fahrspur möglich, dementsprechend bei Linksverkehr nur auf der rechten Fahrspur erlaubt. Erfindungsgemäß wird dieses durch die Merkmale der unabhängigen Ansprüche gelöst. Vorteilhafte Weiterbildungen und Ausgestaltungen ergeben sich aus den Unteransprüchen.

Diese Aufgabe wird durch die Merkmale des Vorrichtungsanspruchs 9 und des Verfahrensanspruchs 1 gelöst.

Im Rahmen der vorliegenden Erfindung wird der Begriff "lateraler Querversatz" oder "seitlicher Querversatz" für die kürzeste Entfernung verwendet, die das Objekt zur verlängerten Fahrzeuglängsachse aufweist. Dementsprechend wird auch ein linksseitiger bzw. rechtsseitiger, lateraler Querversatz definiert, wobei ein linksseitiger lateraler Querversatz bedeutet, dass sich das Objekt auf der in Fahrtrichtung des eigenen Fahrzeugs gesehen, linken Halbebene der verlängerten Fahrzeugachse befindet bzw. bei einem rechtsseitigen, lateralen Querversatz sich das Objekt auf der in Fahrtrichtung des eigenen Fahrzeugs gesehenen rechten Halbebene, die durch die verlängerte Fahrzeuglängsachse begrenzt wird, befindet. Wird zusätzlich ein Koordinatensystem bezüglich des am Fahrzeug befestigten Objektsensors definiert, so kann eine erste v-Achse in Fahrtrichtung, also in Richtung der verlängerten Fahrzeuglängsachse vorgesehen sein und eine hierzu rechtwinklige weitere Koordinate, die q-Achse, die den Querversatz definiert. Ist diese beispielsweise derart vorgesehen, dass die positive Richtung der Querversatzkoordinate in Richtung linksseitiger, lateraler Querversätze zeigt und die negative Querveratzkoordinate in Richtung rechtsseitiger, lateraler Querversätze zeigt, so kann man weiterhin die linksseitigen, lateralen Querversätze auch als positive, laterale Querversätze und die rechtsseitigen lateralen Querversätze als negative laterale Querversätze bezeichnen. Weiterhin wird bezüglich der vorliegenden Erfindung von positiven Relativgeschwindigkeiten gesprochen, wenn ein bewegtes Objekt sich in der gleichen Richtung wie das eigene Fahrzeug bewegt jedoch eine größere Absolutgeschwindigkeit als das eigene Fahrzeug aufweist. Dementsprechend werden negative Relativgeschwindigkeiten für Objekte definiert, die sich entweder in der gleichen Bewegungsrichtung wie das eigene Fahrzeug bewegen, jedoch eine geringere Absolutgeschwindigkeit aufweisen oder für Objekte verwendet, die sich in entgegengesetzter Richtung zur eigenen Fahrzeugbewegungsrichtung bewegen und dabei beliebige Geschwindigkeiten aufweisen können.

Weiterhin wird im Rahmen der vorliegenden Erfindung der Begriff "Rechtsverkehr" für Verkehrssinne benutzt, bei denen die Verkehrsteilnehmer auf der rechten Seite der Fahrbahn fahren, wie es beispielsweise in Mitteleuropa, den Vereinigten Staaten von Amerika oder den meisten anderen Ländern der Welt vorgesehen ist. Der Begriff "Linksverkehr" wird hingegen für Verkehrssinne verwendet, bei denen die Fahrzeuge auf der linken Seite der Fahrbahn fahren, wie es beispielsweise in Großbritannien, Japan oder Australien der Fall ist.

Vorteilhafterweise wird ein Rechtsverkehr erkannt, wenn die detektierten, entgegenkommenden, bewegten Objekte einen linksseitigen, lateralen Querversatz bezüglich der Fahrzeuglängsachse aufweisen und es wird ein Linksverkehr erkannt, wenn ein rechtsseitiger, lateraler Querversatz erkannt wird.

Weiterhin ist es vorteilhaft, dass ein entgegenkommendes, bewegtes Objekt erkannt wird, wenn dieses eine negative Relativgeschwindigkeit aufweist und der Betrag der Relativgeschwindigkeit größer ist als der Betrag der eigenen Fahrzeuggeschwindigkeit.

Vorteilhafterweise wird ein Rechtsverkehr erkannt, wenn die detektierten, stehenden Objekte, deren Betrag des lateralen Querversatzes kleiner als eine Fahrspurbreite ist, einen rechtsseitigen, lateralen Querversatz bezüglich der Fahrzeuglängsachse aufweisen und ein Linksverkehr erkannt wird, wenn die detektierten stehenden Objekte, deren Betrag des lateralen Querversatzes kleiner als eine Fahrspurbreite ist, einen rechtsseitigen lateralen Querversatz bezüglich der Fahrzeuglängsachse aufweisen.

Weiterhin ist es vorteilhaft, dass ein stehendes Objekt erkannt wird, wenn der Betrag der Relativgeschwindigkeit in etwa dem Betrag der eigenen Fahrzeuggeschwindigkeit entspricht.

Vorteilhafterweise wird ein Rechtsverkehr erkannt, wenn die detektierten beweglichen schnelleren Objekte einen linksseitigen, lateralen Querversatz bezüglich der Fahrzeuglängsachse aufweisen und ein Linksverkehr erkannt, wenn die detektierten, beweglichen, schnelleren Objekte einen rechtsseitigen, lateralen Querversatz bezüglich der Fahrzeuglängsachse aufweisen.

Besonders vorteilhaft ist, dass ein bewegliches, schnelleres Objekt erkannt wird, wenn die Relativgeschwindigkeit bezüglich des eigenen Fahrzeugs positiv ist.

Vorteilhafterweise wird ein Rechtsverkehr erkannt, wenn die detektierten, beweglichen, langsameren Objekte einen rechtsseitigen lateralen Querversatz bezüglich der Fahrzeuglängsachse aufweisen und ein Linksverkehr erkannt, wenn die detektierten, beweglichen, langsameren Objekte einen linksseitigen, lateralen Querversatz bezüglich der Fahrzeuglängsachse aufweisen.

Besonders vorteilhaft ist, dass ein bewegliches, langsameres Objekt erkannt wird, wenn die Relativgeschwindigkeit bezüglich des eigenen Fahrzeugs negativ ist und der Betrag der Relativgeschwindigkeit zwischen Null und dem Betrag der eigenen Fahrzeuggeschwindigkeit liegt.

Vorteilhafterweise werden die Erkennungsverfahren für Rechts- und Linksverkehr gegenseitig auf Plausibilität überprüft. Als Erkennungsverfahren im Rahmen der vorliegenden Erfindung wird zum einen die Verkehrssinnerkennung anhand der detektierten, entgegenkommenden, beweglichen Ziele betrachtet, die Erkennung des Verkehrssinns mittels der detektierten, stehenden Objekte, die Erkennung des Verkehrssinns mittels der detektierten, beweglichen, schnelleren Objekte sowie die Verkehrssinnerkennung mittels der detektierten, beweglichen, langsameren Objekte betrachtet. Jedes dieser Erkennungsverfahren kann als Ergebnis Links- oder Rechtsverkehr oder keine Aussage ergeben. So ist beispielsweise die Detektion von beweglichen, schnelleren oder langsameren Objekten auf benachbarten Fahrspuren nur auf mehrspurigen Strassen möglich, wobei bei mehrspurigen Strassen die Detektion entgegenkommender, beweglicher Ziele unmöglich sein kann. Gleichzeitig kann bei der Detektion von entgegenkommenden, beweglichen Zielen eine Detektion von beweglichen, schnelleren oder langsameren Objekten unmöglich sein. So ist es möglich, dass im Rahmen der Plausibilitätsprüfung nicht zwangsweise alle Einzelverfahren zu dem gleichen Ergebnis kommen können, sondern einzelne Verfahren auch zu keinem Ergebnis führen können. Es ist jedoch im Rahmen der Plausibilitätsprüfung notwendig, dass die Ergebnisse von Erkennungsverfahren, die einen links- oder rechtssinnigen Verkehrssinn erkannt haben, gegenseitig zu vergleichen, wobei alle Erkennungsverfahren, die einen Verkehrssinn erkannt haben übereinstimmen müssen, um Fehlerkennungen der Einzelsysteme möglichst gering zu halten. Weiterhin kann im Rahmen der Plausibilitätsüberprüfung eine zeitliche Mittelung erfolgen, so dass bei einer kurzfristigen Erkennung eines anderen Verkehrssinns nicht sofort diese dem Fahrer mitgeteilt wird und die adaptive Abstands- und Geschwindigkeitsregelung entsprechend umgestellt wird, sondern dass dieser neue erkannte Verkehrssinn für eine vorbestimmte Zeitdauer sicher erkannt werden muss, bevor eine Umstellung des adaptiven Abstands- und Geschwindigkeitsreglers sowie die Anzeige des neuen Verkehrssinns erfolgt. Dies führt dazu, dass kurzfristige Störungen die zu einer Umschaltung der Verkehrssinnerkennung führen können, vermieden werden und erst bei einer sicheren Erkennung dieses neuen Verkehrssinns dieses weitergeleitet und weiterverarbeitet wird.

Weiterhin ist es vorteilhaft, dass der momentan erkannte Verkehrssinn dem Fahrer mittels einer Anzeigevorrichtung angezeigt wird. Dies kann beispielsweise durch das Aufleuchten einer Kontrolllampe oder mittels einer Klartextanzeige oder einer symbolischen Anzeige in einem Display des Armaturenbrettes angezeigt werden.

Weiterhin ist es vorteilhaft, dass das Mittel zur Bestimmung des Abstandes, der Relativgeschwindigkeit detektierter Objekte und des azimutalen Objektwinkels, unter dem das Objekt detektiert wurde, aus dem der seitlichen Versatzes der detektierten Objekte bezüglich der Fahrzeuglängsachse ermittelbar ist, ein Radarsensor, ein Lasersensor, ein Ultraschallsensor, ein Videosensor oder eine Kombination hieraus ist.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

### Zeichnungen

Nachfolgend werden Ausführungsbeispiele der Erfindung anhand von Zeichnungen erläutert. Es zeigen
- Figur 1: eine erste Umfeldsituation, wie sie während dem erfindungsgemäßen Betrieb vorkommen kann,
- Figur 2: eine zweite Umfeldsituation, wie sie während dem erfindungsgemäßen Betrieb vorkommen kann,
- Figur 3: ein schematisches Blockdiagramm einer Ausführungsform der erfindungsgemäßen Vorrichtung und
- Figur 4: ein schematisches Blockdiagramm einer Ausführungsform des erfindungsgemäßen Verfahrens.

### Beschreibung von Ausführungsbeispielen

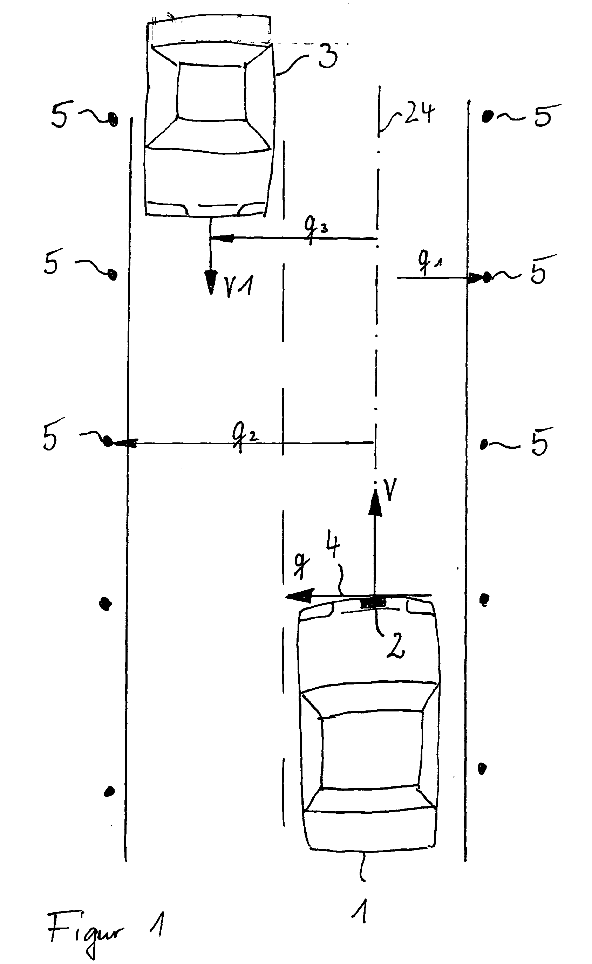

In Figur 1 ist eine erste Umfeldsituation dargestellt, wie sie während dem Betrieb der Erfindung auftreten kann. Zu erkennen ist ein Fahrzeug 1, das auch als eigenes Fahrzeug bezeichnet wird, das einen Objektsensor 2, beispielsweise für eine adaptive Abstandsund Geschwindigkeitsregelung, aufweist. Dieses eigene Fahrzeug 1 bewegt sich auf einer Straße mit der Geschwindigkeit v, wobei die Bewegungsrichtung in Richtung der verlängerten Fahrzeuglängsachse 24 weist. Weiterhin ist ein weiteres Fahrzeug 3 zu erkennen, das sich auf der entgegenkommenden Fahrspur mit der Geschwindigkeit v1 bewegt. Der Objektsensor 2 des Fahrzeugs 1 erkennt das Fahrzeug 3, sobald es in den Objektdetektionsbereich eindringt, und bestimmt dessen Abstand zum eigenen Fahrzeug 1, die Relativgeschwindigkeit bezüglich des eigenen Fahrzeugs 1 sowie den Azimutwinkel, unter dem das Fahrzeug 3 detektiert wurde. Mittels der Entfernung und des Azimutwinkels ist es möglich, den lateralen Querversatz q3 zu berechnen, der die geringste Entfernung des Objekts 3 zur verlängerten Fahrzeuglängsachse 24 repräsentiert. Weiterhin besitzt der Objektsensor 2 ein Koordinatensystem, das eine erste Koordinatenachse in Richtung der verlängerten Fahrzeuglängsachse 24 aufweist (v-Koordinate) sowie eine zweite Koordinatenachse für q-Werte 4 die den lateralen Versatz angibt. Im dargestellten Beispiel ist der Lateralversatz q so definiert, dass positive q-Werte bei linksseitigen Lateralversätzen sowie negative q-Werte bei rechtsseitigen Lateralversätzen definiert sind. Selbstverständlich ist es möglich, die q-Achse anders herum zu definieren, wodurch sich links- und rechtsseitige Lateralversätze in ihrem Vorzeichen bezüglich der q-Werte verändern. Weiterhin sind in Figur 1 stehende Objekte 5 dargestellt, die im vorliegenden Beispiel Objekte am Fahrzeugrand angeordnet sind. Dies können beispielsweise Leitpfosten, Verkehrsschilder, Brückenpfeiler, Bäume, Leitplanken oder andere unbewegte Objekte am Fahrbahnrand sein. Der Objektsensor 2 detektiert auch die am Fahrbahnrand befindlichen Objekte 5 und erkennt aus einem Vergleich der Relativgeschwindigkeit und der eigenen Fahrzeuggeschwindigkeit v, dass es sich hierbei um stehende Objekte handeln muss. Erkennt nun der Objektsensor 2 über einen längeren Zeitraum entgegenkommende Objekte, die eine negative Relativgeschwindigkeit vrel aufweisen, die betragsmäßig größer als die eigene Fahrzeuggeschwindigkeit v ist und gleichzeitig einen linksseitigen, lateralen Querversatz aufweisen, so kann hieraus auf einen Rechtsverkehr geschlossen werden. Werden über einen längeren Zeitraum entgegenkommende Objekte 3 erkannt, die gleichzeitig einen rechtsseitigen, lateralen Querversatz aufweisen, so kann auf einen Linksverkehr geschlossen werden. Als weiteres Erkennungsverfahren werden die stehenden Objekte 5 ausgewertet. Aus der Kenntnis der Geschwindigkeit v des eigenen Fahrzeugs 1 und der Relativgeschwindigkeit der stehenden Objekte 5, die betragsmäßig in etwa der eigenen Geschwindigkeit des Fahrzeugs 1 entspricht, können stehende Objekte beiderseits der Straße erkannt werden. Für diese stehenden Objekte 5 wird der laterale Querversatz q 1, q2 berechnet, wobei der laterale Querversatz q1 nur auf einer Seite der verlängerten Fahrzeuglängsachse 24 geringer sein kann als eine Fahrspurbreite. Stehende Objekte 5 jenseits der Gegenfahrbahn weisen hingegen einen lateralen Querversatz q2 bezüglich der verlängerten Fahrzeuglängsachse 24 auf, der größer als eine Fahrbahnbreite ist. Die durchschnittliche Breite einer Fahrbahn kann hierbei in dem Abstands- und Geschwindigkeitsregler als Durchschnittswert abgespeichert sein und beispielsweise zwischen 3,4 Meter und 3,8 Meter betragen.

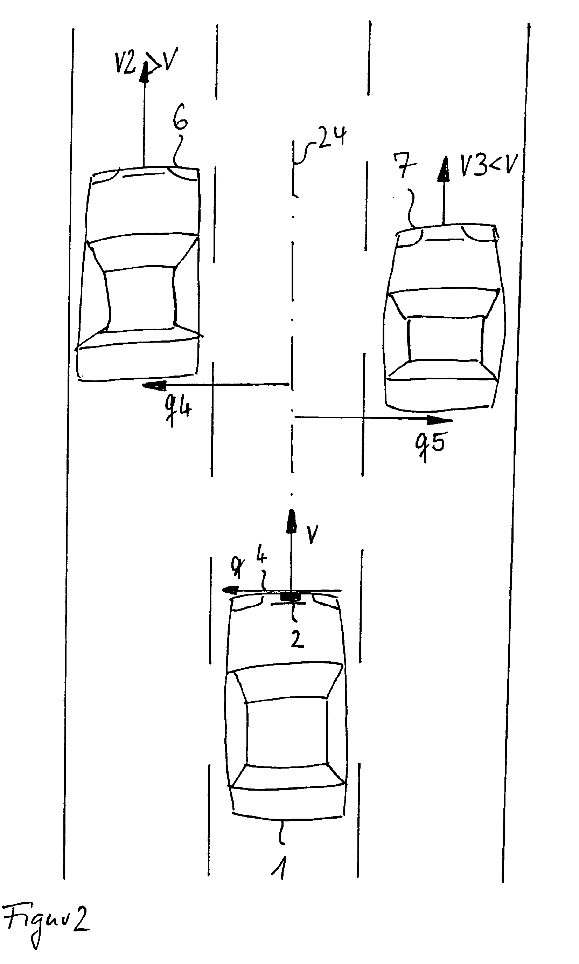

In Figur 2 ist eine weitere Umfeldsituation dargestellt, wie sie insbesondere bei Fahrten auf mehrspurigen Straßen vorkommen kann. Zu erkennen ist das eigene Fahrzeug 1, das mit einem Objektsensor 2 ausgestattet ist. Dieses eigene Fahrzeug bewegt sich im vorliegenden Beispiel auf der mittleren Fahrspur einer dreispurigen Straße. Auf der linken, benachbarten Fahrspur bewegt sich ein weiteres Fahrzeug 6, das mit einer Geschwindigkeit v2 unterwegs ist, die größer als die Geschwindigkeit v des Fahrzeugs 1 ist. Weiterhin ist ein drittes Fahrzeug 7 dargestellt, das mit der Geschwindigkeit v3 betrieben wird, die kleiner als die Geschwindigkeit v des eigenen Fahrzeugs 1 ist. Das Fahrzeug 6, das sich mit der Geschwindigkeit v2 fortbewegt hat das eigene Fahrzeug 1 vor kurzem überholt und das dritte Fahrzeug 7, das mit der Geschwindigkeit v3 bewegt wird, die geringer als die Geschwindigkeit v des eigenen Fahrzeugs 1 ist, wird in Kürze von dem eigenen Fahrzeug 1 überholt. Während dem erfindungsgemäßen Betrieb halten sich die Fahrzeuge 6, 7 im Objekterfassungsbereich des Objektsensors 2 auf, wodurch dieser deren Abstand, deren Relativgeschwindigkeit sowie den Azimurivinkel dieser Fahrzeuge misst. Weiterhin ist die Geschwindigkeit des eigenen Fahrzeugs 1 durch den Geschwindigkeitssensor 10 bekannt. Hieraus lassen sich die Absolutgeschwindigkeiten der Fahrzeuge 6, 7 berechnen, so wie deren lateraler Querversatz q4, q5 bezüglich der verlängerten Fahrzeuglängsachse 24 berechnen. Erkennt der Objektsensor 2 ein Fahrzeug, das eine positive Relativgeschwindigkeit bezüglich des Fahrzeugs 1 aufweist, das sich also schneller bewegt als das eigene Fahrzeug 1, so wird bei gleichzeitigem Vorliegen eines linksseitigen, lateralen Querversatzes q4 auf einen Rechtsverkehr geschlossen und bei einem rechtsseitigen, lateralen Querversatz auf einen Linksverkehr geschlossen. Wird durch den Objektsensor 2 ein Fahrzeug 7 erkannt, das eine negative Relativgeschwindigkeit aufweist, wobei dessen Betrag der Absolutgeschwindigkeit v3 zwischen Null und der Geschwindigkeit v des eigenen Fahrzeugs liegt, so handelt es sich hierbei um ein langsameres Fahrzeug, das jedoch die gleiche Bewegungsrichtung wie das eigene Fahrzeug 1 aufweist. Wird bezüglich dieses Fahrzeugs 7 ein rechtsseitiger, lateraler Querversatz q5, der im vorliegenden Beispiel auch ein negativer q-Wert sein kann, ermittelt, so schließt die Erkennungsvorrichtung auf einen Rechtsverkehr, weist das langsamere Fahrzeug jedoch einen linksseitigen, lateralen Querversatz q5 bezüglich der verlängerten Fahrzeuglängsachse 24 auf (positiver q-Wert), so wird auf einen Linksverkehr geschlossen.

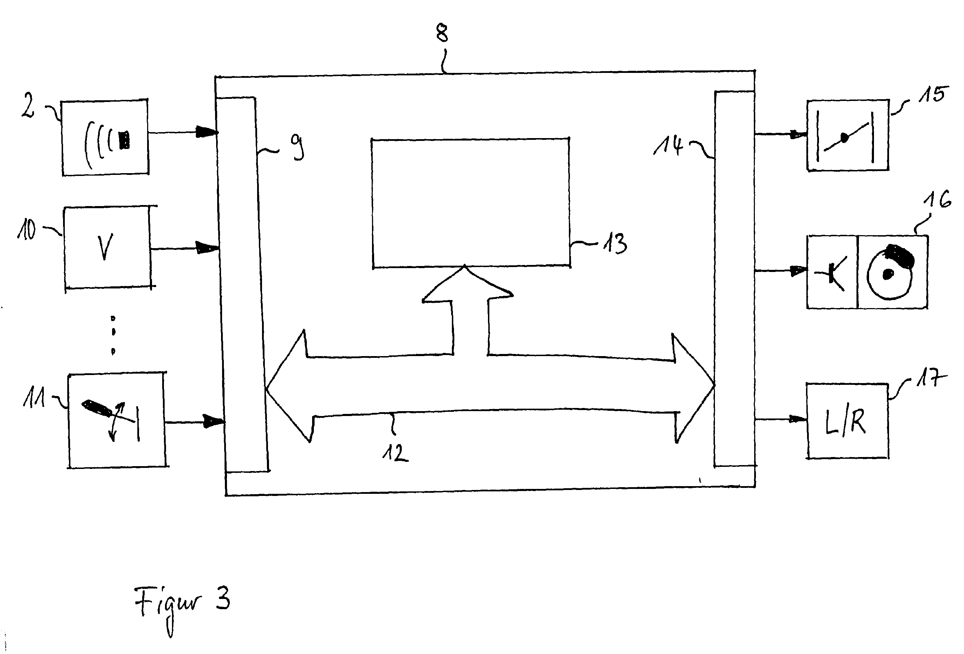

In Figur 3 ist ein Blockschaltbild einer Ausführungsform der erfindungsgemäßen Vorrichtung dargestellt. Zu erkennen ist eine Abstands- und Geschwindigkeitsregelvorrichtung 8, die unter anderem eine Eingangsschaltung 9 aufweist. Mittels der Eingangsschaltung 9 werden dem Abstands- und Geschwindigkeitsregler 8 Eingangssignale zugeführt. Diese Eingangssignale stammen beispielsweise von einem Objektsensor 2, der beispielsweise als Radar-, Laser-, Ultraschall-, Videosensor oder einer Kombination hieraus ausgeführt sein kann, und repräsentieren die Relativgeschwindigkeit, den Abstand sowie den Azimutwinkel der erkannten Objekte bezüglich der verlängerten Fahrzeuglängsachse 24. Weiterhin wird der Eingangsschaltung 9 ein Geschwindigkeitssignal von einem Geschwindigkeitssensor 10 zugeführt, der die Geschwindigkeit des eigenen Fahrzeugs 1 ermittelt. Neben weiteren Eingangsgrößenvorrichtungen ist unter anderem ein Bedienelement 11 vorgesehen, mittels dem der Abstands- und Geschwindigkeitsregler 8 ein- und ausschaltbar sowie einstellbar und bedienbar ist. Die der Eingangsschaltung 9 zugeführten Größen werden mittels einer Datenaustauscheinrichtung 12 einer Berechnungseinrichtung 13 zugeführt. Die Berechnungseinrichtung 13 ist beispielsweise als Mikroprozessor oder digitaler Signalprozessor ausgeführt und berechnet aus den Eingangsgrößen Stellsignale zur Regelung der Fahrzeuggeschwindigkeit sowie weitere Ausgangsgrößen. In dieser Berechnungseinrichtung 13 ist unter anderem das erfindungsgemäße Verfahren vorgesehen, beispielsweise in Form von Rechnersoftware, die in der erfindungsgemäßen Weise aus den Eingangsgrößen Ausgangssignale generiert. Die von der Berechnungseinrichtung 13 erzeugten Ausgangssignale werden mittels der Datenaustauscheinrichtung 12 einer Ausgangsschaltung 14 zugeführt, die unter anderem Stellsignale an ein leistungsbestimmendes Stellelement einer Brennkraftmaschine 15 sowie die Verzögerungseinrichtung 16 des Fahrzeugs ausgibt. Hat die Berechnungseinrichtung 13 einen Beschleunigungsbedarf für das eigene Fahrzeug 1 ermittelt, so wird dem leistungsbestimmenden Stellelement 15, das beispielsweise eine elektrisch steuerbare Drosselklappe, eine Kraftstoffmengenzumesseinrichtung eines Speichereinspritzsystems oder eine elektrisch steuerbare Regelstange einer Kraftstoffeinspritzpumpe sein kann, ein entsprechendes Stellsignal weitergegeben, das dieses in eine Beschleunigung umsetzen lässt. Hat die Berechnungseinrichtung 13 einen Verzögerungsbedarf für das eigene Fahrzeug 1 berechnet, so wird den Verzögerungseinrichtungen 16 des Fahrzeugs ein Verzögerungssignal zugeführt. Dieses Verzögerungssignal kann beispielsweise mittels einer elektrisch betätigbaren Bremsvorrichtung, die beispielsweise eine elektrohydraulische Bremse sein kann oder eine elektrisch angetriebene Servobremse sein kann, in eine Fahrzeugverzögerung umgesetzt. Weiterhin ist vorgesehen, dass die Ausgangsschaltung 14 ein Signal an eine Anzeigeeinrichtung 17 ausgibt, die dem Fahrer mitteilt, welcher Verkehrssinn erkannt wurde und momentan im Abstands- und Geschwindigkeitsregler 8 eingestellt ist. Die Anzeigeeinrichtung 17 kann beispielsweise eine Klartextanzeige im Armaturenbrett des Fahrzeugs sein oder aber eine oder mehrere Kontrollleuchten in der Armaturentafel des Fahrzeugs umfassen.

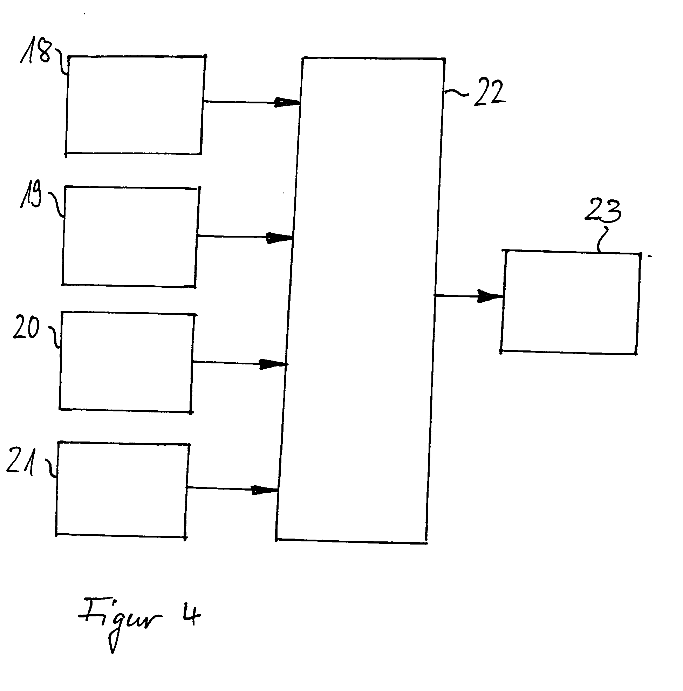

In Figur 4 stellen die Funktionsblöcke 18 bis 21 die unterschiedlichen Erkennungsverfahren für den Verkehrssinn dar. Diese unterschiedlichen Erkennungsverfahren können parallel ablaufen und ihre Ergebnisse einer Plausibilisierungsstufe 22 weitergeben. So wird in Block 18 in Abhängigkeit der detektierten, entgegenkommenden, beweglichen Ziele, wie sie beispielsweise durch das Fahrzeug 3 skizziert sind, der Verkehrssinn ermittelt. In Block 19 wird in Abhängigkeit der detektierten, stehenden Objekte wie sie beispielsweise durch die Fahrbahnrandbegrenzungen 5 skizziert wurden, der Verkehrssinn ermittelt. In Block 20 wird in Abhängigkeit der detektierten, beweglichen, schnelleren Objekte, wie sie beispielsweise in Figur 2 durch Fahrzeug 6 dargestellt sind, der Verkehrssinn ermittelt, ob ein Rechts- oder Linksverkehr vorliegt oder kein Ergebnis festgestellt werden kann. In Block 21 wird aus den detektierten, beweglichen, langsameren Objekten, wie sie beispielsweise in Figur 2 durch Fahrzeug 7 skizziert sind, der momentane Verkehrssinn ermittelt. Die Ergebnisse, die von den einzelnen Erkennungsverfahren in den Blöcken 18 bis 21 ermittelt wurden, werden einer Plausibilisierungsstufe 22 zugeführt und können als Ergebnis entweder einen Linksverkehr, einen Rechtsverkehr oder kein feststellbares Ergebnis ausgeben. Dadurch, dass mache Erkennungsverfahren hauptsächlich auf mehrspurigen Fahrbahnen funktionieren und andere Erkennungsverfahren hauptsächlich auf Fahrbahnen funktionieren, die einen Gegenverkehr vorsehen und für jede Fahrtrichtung nur eine Fahrspur vorsehen, ist es möglich, dass nicht immer alle Verfahren ein eindeutiges Ergebnis liefern können, weshalb auch ein unbestimmter Zustand, also kein ermittelbarer Verkehrssinn ausgegeben werden kann. Die Plausibilisierungsstufe 22 überprüft, ob die Ergebnisse, die entweder einen Rechtsverkehr oder einen Linksverkehr ergeben haben zueinander widersprüchlich sind. Hierzu werden die Ergebnisse der Erkennungsverfahren, die kein Ergebnis ermitteln konnten, nicht berücksichtigt, die Ergebnisse die einen Links- oder Rechtsverkehr ergeben haben, müssen jedoch allesamt zu einem eindeutigen Ergebnis geführt haben, d. h. alle Ergebnisse die entweder Rechtsoder Linksverkehr ergeben haben müssen zeitgleich auch ein identisches Ergebnis ergeben haben. Wird durch diese Plausibilisierungsstufe 22 ein Rechtsverkehr oder ein Linksverkehr erkannt, so muss dieser Verkehrssinn über einen längeren Zeitraum stabil erkannt werden, d. h., es darf keine Umschaltung auf einen andersinnigen Verkehrssinn während dieser Zeit erfolgen. Wird ein Verkehrssinn über den vorbestimmten Zeitraum eindeutig erkannt, so wird dieser Verkehrssinn in Block 23 dem Abstands- und Geschwindigkeitsregler übergeben, der diese Information zur Einstellung bestimmter Fahrfunktionen und Regelparameter benötigt. Weiterhin wird durch Block 23 die Anzeigeeinrichtung 17, die den Fahrer über den momentan erkannten Verkehrssinn informiert, ausgegeben. Weiterhin kann vorgesehen sein, dass der Fahrer die Möglichkeit hat, manuell einzugreifen und die Verkehrssinnerkennung durch eine manuelle Vorgabe des Verkehrssinns einzustellen. Diese Möglichkeit gewährleistet, dass der Fahrer bei einem falsch erkannten Verkehrssinn die automatische Erkennung überstimmen kann und dem Regler den momentan geltenden, korrekten Verkehrssinn vorgeben kann.

## Patentansprüche

1. Verfahren zur automatischen Erkennung und Einstellung des Verkehrssinns in einer adaptiven Abstands- und Geschwindigkeitsregelung (8), insbesondere für ein Kraftfahrzeug(1), wobei dem adaptiven Abstands- und Geschwindigkeitsregler (8) die Relativgeschwindigkeit detektierter Objekte(3, 5, 6, 7), der seitliche Versatz (q1, q2, q3, q4, q5) der detektierten Objekte (3, 5, 6, 7) bezüglich der Fahrzeuglängsachse (24) und die Geschwindigkeit (v) des eigenen Fahrzeugs (1) zugeführt wird, wobei
- in Abhängigkeit der detektierten, entgegenkommenden, beweglichen Ziele (3, 18) entschieden wird, ob ein Linksverkehr oder ein Rechtsverkehr vorliegt indem ein Rechtsverkehr erkannt wird, wenn die detektierten, entgegenkommenden, bewegten Objekte (3) einen linksseitigen lateralen Querversatz (q3) bezüglich der Fahrzeuglängsachse (24) aufweisen und ein Linksverkehr erkannt wird, wenn ein rechtsseitiger lateraler Querversatz (q3) erkannt wird und
- in Abhängigkeit der detektierten, stehenden Objekte (519) entschieden wird, ob ein Linksverkehr oder ein Rechtsverkehr vorliegt indem ein Rechtsverkehr erkannt wird, wenn die detektierten, stehenden Objekte (5), deren Betrag des lateralen Querversatzes (q1, q2) kleiner als eine Fahrspurbreite ist, einen rechtsseitigen lateralen Querversatz (q1, q2) bezüglich der Fahrzeuglängsachse (24) aufweisen und ein Linksverkehr erkannt wird, wenn die detektierten, stehenden Objekte (5), deren Betrag des lateralen Querversatzes (q1, q2) kleiner als eine Fahrspurbreite ist, einen rechtsseitigen lateralen Querversatz (q1, q2) bezüglich der Fahrzeuglängsachse (24) aufweisen
**dadurch gekennzeichnet, dass** die Erkennungsverfahren für Rechts- und Linksverkehr gegenseitig auf Plausibilität (22) überprüft werden und eine erkannte Änderung des Verkehrssinns für eine vorbestimmte Zeitdauer sicher erkannt werden muss, bevor eine Umstellung des adaptiven Abstands- und Geschwindigkeitsreglers sowie die Anzeige des neuen Verkehrssinns erfolgt.

2. Verfahren nach Anspruch 1, **dadurch gekennzeichnet, dass** ein entgegenkommendes, bewegtes Objekt (3) erkannt wird, wenn dieses eine negative Relativgeschwindigkeit aufweist und der Betrag der Relativgeschwindigkeit größer ist als der Betrag der eigenen Fahrzeuggeschwindigkeit (v).

3. Verfahren nach Anspruch 1, **dadurch gekennzeichnet, dass** ein stehendes Objekt erkannt wird, wenn der Betrag der Relativgeschwindigkeit in etwa dem Betrag der eigenen Fahrzeuggeschwindigkeit (v) entspricht.

4. Verfahren nach Anspruch 1, **dadurch gekennzeichnet, dass** ein Rechtsverkehr erkannt wird, wenn die detektierten, beweglichen, schnelleren Objekte (6) einen linksseitigen, lateralen Querversatz (q4) bezüglich der Fahrzeuglängsachse (24) aufweisen und ein Linksverkehr erkannt wird, wenn die detektierten, beweglichen, schnelleren Objekte (6) einen rechtsseitigen, lateralen Querversatz (q4) bezüglich der Fahrzeuglängsachse aufweisen.

5. Verfahren nach Anspruch 1, oder 4, **dadurch gekennzeichnet, dass** ein bewegliches, schnelleres Objekt (6) erkannt wird, wenn die Relativgeschwindigkeit bezüglich des eigenen Fahrzeugs (1) positiv ist.

6. Verfahren nach Anspruch 1, **dadurch gekennzeichnet, dass** ein Rechtsverkehr erkannt wird, wenn die detektierten, beweglichen, langsameren Objekte (7) einen rechtsseitigen lateralen Querversatz (q5) bezüglich der Fahrzeuglängsachse (24) aufweisen und ein Linksverkehr erkannt wird, wenn die detektierten, beweglichen, langsameren Objekte (7) einen linksseitigen, lateralen Querversatz (q5) bezüglich der Fahrzeuglängsachse (24) aufweisen.

7. Verfahren nach Anspruch 1 oder 6, **dadurch gekennzeichnet, dass** ein bewegliches, langsameres Objekt (7) erkannt wird, wenn die Relativgeschwindigkeit bezüglich des eigenen Fahrzeugs (1) negativ ist und der Betrag der Relativgeschwindigkeit zwischen Null und dem Betrag der eigenen Fahrzeuggeschwindigkeit (v) liegt.

8. Verfahren nach Anspruch 1, **dadurch gekennzeichnet, dass** der momentan erkannte Verkehrssinn dem Fahrer mittels einer Anzeigevorrichtung (17) angezeigt wird (23).

9. Vorrichtung zur automatischen Erkennung und Einstellung des Verkehrssinns in einer adaptiven Abstands- und Geschwindigkeitsregelung (8), insbesondere für ein Kraftfahrzeug (1), wobei Mittel (2,10) zur Bestimmung der Relativgeschwindigkeit detektierter Objekte, des seitlichen Versatzes der detektierten Objekte bezüglich der Fahrzeuglängsachse und der Geschwindigkeit des eigenen Fahrzeugs vorgesehen sind, **dadurch gekennzeichnet, dass** in der Vorrichtung das Verfahren nach Anspruch 1 abläuft.

10. Vorrichtung nach Anspruch 9, **dadurch gekennzeichnet, dass** das Mittel (2) zur Bestimmung der Relativgeschwindigkeit detektierter Objekte und des seitlichen Versatzes der detektierten Objekte bezüglich der Fahrzeuglängsachse (24) ein Radarsensor, ein Lasersensor, ein Ultraschallsensor, ein Videosensor oder eine Kombination hieraus ist.

## Claims

1. Method for automatically detecting and setting right-hand driving or left-hand driving in an adaptive inter-vehicle distance and cruise controller (8), in particular for a motor vehicle (1), wherein the relative velocity of detected objects (3, 5, 6, 7), the lateral offset (q1, q2, q3, q4, q5) of the detected objects (3, 5, 6, 7) with respect to the longitudinal axis (24) of the vehicle and the velocity (v) of the driver's own vehicle (1) are fed to the adaptive inter-vehicle distance and cruise controller (8), wherein
- as a function of the detected, oncoming moving targets (3, 18) it is decided whether left-hand driving or right-hand driving is present in that right-hand driving is detected if the detected, oncoming moving objects (3) have a left-sided lateral offset (q3) with respect to the longitudinal axis (24) of the vehicle, and left-hand driving is detected if a right-sided lateral offset (q3) is detected, and
- as a function of the detected stationary objects (5, 19) it is decided whether left-hand driving or right-hand driving is present in that right-hand driving is detected if the detected stationary objects (5) whose amount of lateral offset (q1, q2) is less than a lane width have a right-sided lateral offset (q1, q2) with respect to the longitudinal axis (24) of the vehicle, and left-hand driving is detected if the detected stationary objects (5) whose amount of lateral offset (q1, q2) is less than a lane width have a left-sided lateral offset (q1, q2) with respect to the longitudinal axis (24) of the vehicle,
**characterized in that** the detection methods for right-hand and left-hand driving are checked against one another for plausibility (22), and a detected change in the right-hand or left-hand driving for a predetermined time period has to be reliably detected before the adaptive inter-vehicle distance and cruise controller is reset and the new right-hand or left-hand driving is displayed.

2. Method according to Claim 1, **characterized in that** an oncoming moving object (3) is detected if it has a negative relative velocity and the absolute value of the relative velocity is higher than the absolute value of the velocity (v) of the driver's own vehicle.

3. Method according to Claim 1, **characterized in that** a stationary object is detected if the absolute value of the relative velocity corresponds approximately to the absolute value of the velocity (v) of the driver's own vehicle.

4. Method according to Claim 1, **characterized in that** right-hand driving is detected if the detected moving relatively fast objects (6) have a left-sided lateral offset (q4) with respect to the longitudinal axis (24) of the vehicle, and left-hand driving is detected if the detected moving relatively fast objects (6) have a right-sided lateral offset (q4) with respect to the longitudinal axis of the vehicle.

5. Method according to Claim 1 or 4, **characterized in that** a moving relatively fast object (6) is detected if the relative velocity is positive with respect to the driver's own vehicle (1).

6. Method according to Claim 1, **characterized in that** right-hand driving is detected if the detected moving relatively slow objects (7) have a right-sided lateral offset (q5) with respect to the longitudinal axis (24) of the vehicle, and left-hand driving is detected if the detected moving relatively slow objects (7) have a left-sided lateral offset (q5) with respect to the longitudinal axis (24) of the vehicle.

7. Method according to Claim 1 or 6, **characterized in that** a moving relatively slow object (7) is detected if the relative velocity is negative with respect to the driver's own vehicle (1) and the absolute value of the relative velocity is between zero and the absolute value of the velocity (v) of the driver's own vehicle.

8. Method according to Claim 1, **characterized in that** the instantaneously detected right-hand driving or left-hand driving is displayed (23) to the driver by means of a display device (17).

9. Device for automatically detecting and setting right-hand driving or left-hand driving in an adaptive inter-vehicle distance and cruise controller (8), in particular for a motor vehicle (1), wherein means (2, 10) are provided for determining the relative velocity of detected objects, the lateral offset of the detected objects with respect to the longitudinal axis of the vehicle and the velocity of the driver's own vehicle, **characterized in that** the method according to Claim 1 runs in the device.

10. Device according to Claim 9, **characterized in that** the means (2) for determining the relative velocity of detected objects and the lateral offset of the detected objects with respect to the longitudinal axis (24) of the vehicle is a radar sensor, a laser sensor, an ultrasonic sensor, a video sensor or a combination thereof.

## Revendications

1. Procédé de détection automatique et d'ajustement du sens du trafic dans une régulation adaptative (8) de distance et de vitesse, en particulier pour un véhicule automobile (1),
dans lequel la vitesse relative d'objets (3, 5, 6, 7) détectés, le décalage latéral (q1, q2, q3, q4, q5) des objets détectés (3, 5, 6, 7) par rapport à l'axe longitudinal (24) du véhicule et la vitesse (v) du véhicule concerné (1) sont à amenés à la régulation adaptative (8) de distance et de vitesse, et dans lequel
en fonction des cibles mobiles (3, 18) détectées et circulant en sens inverse, on décide si le trafic est situé à gauche ou à droite en détectant un trafic à droite si les objets mobiles (3) détectés et venant en sens inverse présentent un décalage latéral (q3) du côté gauche de l'axe longitudinal (24) du véhicule et un trafic à gauche si on détecte un décalage latéral (q3) du côté droit et dans lequel
en fonction des objets fixes (5, 19) détectés, on décide si le trafic s'effectue à gauche ou à droite en détectant un trafic à droite si les objets fixes détectés (5) dont le niveau de décalage latéral (q1, q2) est inférieur à la largeur de la bande de circulation présentent un décalage latéral à droite (q1, q2) de l'axe longitudinal (24) du véhicule et un trafic à gauche si les objets fixes détectés (5) dont le niveau de décalage latéral (q1, q2) est inférieur à la largeur de la bande de circulation présentent un décalage latéral (q1, q2) à gauche de l'axe longitudinal (24) du véhicule,
**caractérisé en ce que**
on vérifie la plausibilité (22) des opérations de détection du trafic à droite et du trafic à gauche et on doit reconnaître en toute sécurité que la modification détectée du sens du trafic a lieu pendant une durée prédéterminée avant d'effectuer un nouveau réglage du régulateur adaptatif de distance et de vitesse ainsi que l'affichage du nouveau sens du trafic.

2. Procédé selon la revendication 1, **caractérisé en ce que** l'on détecte qu'un objet mobile (3) vient en sens inverse lorsque sa vitesse relative est négative et lorsque la valeur de la vitesse relative est supérieure à la valeur de la vitesse propre (v) du véhicule.

3. Procédé selon la revendication 1, **caractérisé en ce que** l'on détecte qu'un objet est fixe si la valeur de sa vitesse relative correspond sensiblement à la valeur de la vitesse propre (v) du véhicule.

4. Procédé selon la revendication 1, **caractérisé en ce que** l'on détecte que le trafic s'effectue à droite si les objets mobiles détectés (6) plus rapides présentent un décalage latéral (q4) à gauche de l'axe longitudinal (24) du véhicule et un trafic du côté gauche si les objets mobiles détectés (6) plus rapides présentent un décalage latéral (q4) à droite de l'axe longitudinal du véhicule.

5. Procédé selon les revendications 1 ou 4, **caractérisé en ce que** l'on détecte qu'un objet mobile (6) est plus rapide si sa vitesse relative par rapport au véhicule propre (1) est positive.

6. Procédé selon la revendication 1, **caractérisé en ce que** l'on détecte que le trafic s'effectue à droite si les objets mobiles détectés (7) plus lents présentent un décalage latéral (q5) à droite de l'axe longitudinal (24) du véhicule et on détecte que le trafic s'effectue à gauche si les objets mobiles détectés (7) plus lents présentent un décalage latéral (q5) à gauche de l'axe longitudinal (24) du véhicule.

7. Procédé selon les revendications 1 ou 6, **caractérisé en ce que** l'on détecte qu'un objet mobile (7) est plus lent si sa vitesse relative par rapport au véhicule propre (1) est négative et si le niveau de vitesse relative est compris entre zéro et le niveau de la vitesse propre (v) du véhicule.

8. Procédé selon la revendication 1, **caractérisé en ce que** le sens du trafic détecté à tout instant est affiché (23) au conducteur au moyen d'un dispositif d'affichage (17).

9. Dispositif de détection automatique et d'ajustement du sens du trafic dans une régulation adaptative (8) de distance et de vitesse, en particulier pour un véhicule automobile (1), dans lequel des moyens (2, 10) de détermination de la vitesse relative d'objets détectés, du décalage latéral des objets détectés par rapport à l'axe longitudinal du véhicule et de la vitesse du véhicule propre sont prévus,
**caractérisé en ce que**
le procédé selon la revendication 1 est exécuté dans le dispositif.

10. Dispositif selon la revendication 9, **caractérisé en ce que** le moyen (2) de détermination de la vitesse relative des objets détectés et du décalage latéral des objets détectés par rapport à l'axe longitudinal (24) du véhicule est un détecteur radar, un détecteur laser, un détecteur à ultrasons, un détecteur vidéo ou une de leurs combinaisons.
